# EUROPÄISCHE PATENTANMELDUNG

(11) **EP 2 224 299 A2**
(43) Veröffentlichungstag der Anmeldung: **01.09.2010**
(21) Anmeldenummer: 10154056.5
(22) Anmeldetag: 19.02.2010
(51) Int. Cl.: G05B 19/418

(54) **Kopplung von ERP-Systemen mit Prozessleitsystemen zur automatisierten Übertragung von Anlagenstrukturen und Anlagendaten**

(30) Priorität: 27.02.2009 DE 102009010795
(71) Anmelder: SIEMENS AKTIENGESELLSCHAFT, 80333 München (DE)
(72) Erfinder: Dürr, Thomas, 91056, Erlangen (DE); Herrmann, Paul, 76133, Karlsruhe (DE); Sicking, Wilfried, 91058, Erlangen (DE); Unkelbach, Michael, 91054, Buckenhof (DE)

(57) **Zusammenfassung**

Die Erfindung betrifft ein Verfahren zur Instandhaltung einer technischen Anlage (1) mit mehreren Komponenten, umfassend ein System zur Planung der Verwendung von Unternehmungsressourcen (=ERP-System) und ein Leitsystem, wobei das ERP-System mit dem Leitsystem verbunden wird und Strukturen der technischen Anlage (1) im ERP-System automatisch aufgebaut werden.

## Beschreibung

Kopplung von ERP-Systemen mit Prozessleitsystemen zur automatisierten Übertragung von Anlagenstrukturen und Anlagendaten

Die Erfindung betrifft ein Verfahren zur Instandhaltung einer technischen Anlage

Enterprise Resource Planning (ERP = Planung des Einsatzes oder der Verwendung der Unternehmensressourcen) bezeichnet die unternehmerische Aufgabe, die in einem Unternehmen vorhandenen Ressourcen (Kapital, Betriebsmittel oder Personal) möglichst effizient für den betrieblichen Ablauf einzusetzen.

In vielen Firmen wird heute ein ERP-System zur Verfolgung der Kosten und Bestellvorgänge eingesetzt. Mehr und mehr werden auch Instandhaltungsdaten und Prozesse dort durchgeführt.

Klassisch sind diese ERP-Systeme nicht mit Prozessleitsystemen gekoppelt. Die Strukturen und dazugehörigen Stammdaten bzw. Sachmerkmale werden jeweils separat händisch eingepflegt.

Viele Merkmale des ERP-Systems werden auch in der Leittechnik benötigt und müssen daher doppelt eingegeben werden. Um beide Systeme synchron zu halten (z.B. bei Baugruppenwechsel etc.) sind erhebliche Anstrengungen notwendig.

Bisher werden die Daten händisch eingetragen, eine laufende, automatisierte Konsistenzhaltung existiert nicht.

Aufgabe der Erfindung ist es daher, ein Verfahren bereitzustellen mit dem eine schnelle und zuverlässige Erstbefüllung von ERP-Systemen mit der Anlagenstruktur bzw. mit Anlagendaten erfolgen kann und eine laufende Konsistenzhaltung erleichtert wird.

Erfindungsgemäß wird diese Aufgabe gelöst durch das Verfahren gemäß Anspruch 1. Vorteilhafte Weiterbildungen der Erfindung sind in den abhängigen Ansprüchen definiert. Indem zur Instandhaltung einer technischen Anlage mit mehreren Komponenten, umfassend ein System zur Planung der Verwendung von Unternehmungsressourcen (=ERP-System) und ein Leitsystem, das ERP-System mit dem Leitsystem verbunden wird und Strukturen der technischen Anlage im ERP-System automatisch aufgebaut werden, wird folgendes erreicht:

Der Aufwand für die erstmalige Abbildung der Anlage im ERP-System wird durch die Kopplung von Leit- und ERP-System reduziert. Im späteren Betrieb entfallen aufwendige Abgleichprozesse zwischen den Systemen. Die Darstellung der Informationen aus beiden Systemen führt schneller zur Identifikation von systemischen Fehlern und zum gleichzeitigen Optimieren der Instandhaltungsaktivitäten (z.B. wenn mehrfaches Reparieren erfolglos ist, da die verfahrenstechnische Auslegung des Anlagenteils nicht ausreichend war). Das Zusammenlegen der Diagnostischen/Leittechnik- Abteilung und der Instandhaltungsabteilung beim Anwender wird ermöglicht bzw. erleichtert, da mit dem erfinderischen Verfahren beide die gleichen Informationen und Systeme nutzen.

Vorteilhafterweise umfassen die Strukturen der technischen Anlage technische Plätze (functional locations) und Ausstattungen, Einrichtungen oder Hilfsmittel (equipment). Die in ERP-Systemen als functional locations bezeichneten technischen Plätze stellen den Detaillierungsgrad unterhalb der Anlagenebene dar. Mitteilungen oder Meldungen ("notifications") und Aufträge ("work orders") beinhalten Verweise auf technische Plätze. Technische Plätze kennzeichnen die Orte, an denen Arbeiten erledigt werden. Sie stellen ein Gebäude, eine Etage oder einen Raum dar. Equipment bezieht sich auf einmalig identifizierbare Gegenstände, die installiert und vom Gebäude oder Raum unabhängig gewartet werden, oder ausgetauscht werden, wie beispielsweise ein Luftverdichter, eine Luftversorgungseinheit oder eine elektrische Schalttafel.

Es ist zweckmäßig, wenn Schwellwerte für die Komponenten eingerichtet werden.

Vorteilhafter Weise werden zustandhaltungsrelevante Daten (für zustandsbedingte Wartung) aus dem Leitsystem an das ERP-System übermittelt, so dass bei Überschreiten eines Schwellwertes ein Voralarm ausgelöst werden kann bzw. auch ausgelöst wird. Weiterhin vorteilhaft ist es, wenn Instandhaltungsanforderungen ausgelöst werden.

Im erfinderischen Verfahren wird vorteilhafter Weise eine Wartungsmaßnahme des ERP-Systems mit Hilfe einer graphischen Benutzeroberfläche des Leitsystems geplant.

Dabei ist es zweckmäßig, wenn zur Bestimmung eines möglichen Lösungswegs leittechnische und ERP-Information gemeinsam dargestellt werden.

Vorteilhafter Weise umfassen die Informationen eine letzte Reparatur, Dauer und Kosten.

Weiterhin ist es vorteilhaft, wenn eine gesamte Instandhaltungshistorie einer Komponente dargestellt wird, wobei zweckmäßiger Weise eine Darstellung nach Auftragsart (Kalibrierung, Wartung, Störung) erfolgt.

Ebenfalls vorteilhaft ist es, wenn zugehörige Alarme und Trendlinien über einen Beobachtungszeitraum dargestellt werden.

Der besondere betriebswirtschaftliche Vorteil liegt darin, dass der Techniker vor Ort von Tätigkeiten entlastet wird, die betriebswirtschaftlich notwendig sind, aber fehleranfällig sind und vom Techniker nicht besonders gerne gemacht werden, wie z. B. Formulare ausfüllen etc.. Ein Datenabgleich zwischen ERP-System und Leitsystem entfällt, da auf dieselben Daten zugegriffen wird.

Die Erfindung wird beispielhaft anhand der Zeichnungen näher erläutert. Es zeigen schematisch und nicht maßstäblich:
- FIG 1: eine Darstellung eines Anlagenübersichtsbildes des Leitsystems,
- FIG 2: eine Darstellung eines Anlagenübersichtsbildes des Leitsystems im Fehler- oder Wartungsfall mit geöffnetem Kontextmenü zur fehlerhaften Komponente mit dazugehörigen Instandhaltungsinformationen für die Komponente,

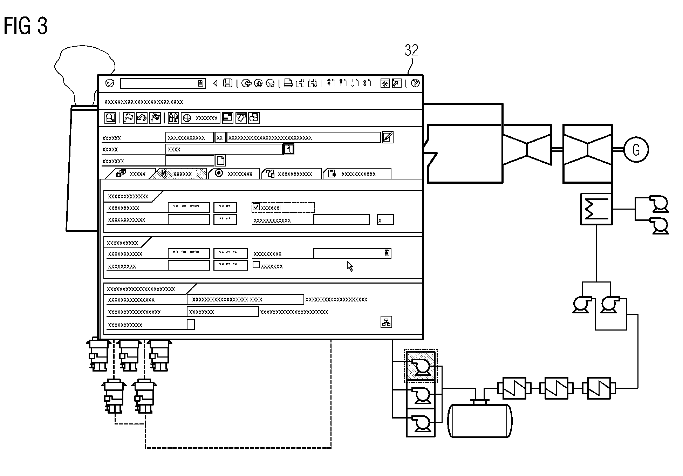

- FIG 3: eine Darstellung eines Anlagenübersichtsbildes des Leitsystems im Fehler- oder Wartungsfall mit gestartetem Wartungsprogramm des ERP-Systems und
- FIG 4: eine schematische Darstellung der Anlagenstruktur in den beiden Systemen.

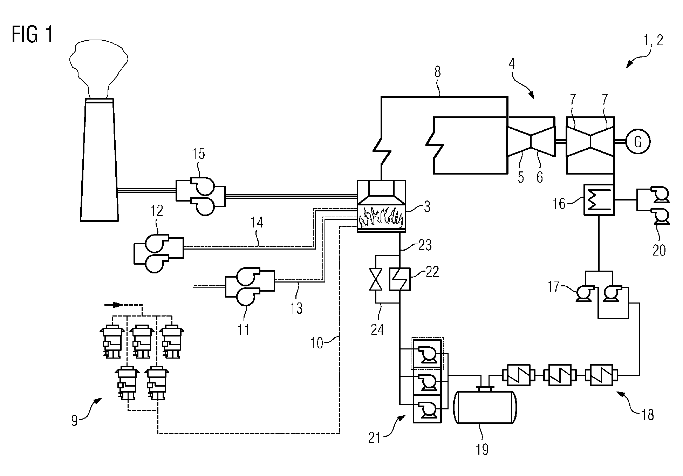

Die FIG 1 zeigt schematisch und beispielhaft eine Darstellung eines Übersichtsbildes einer technischen Anlage 1 am Beispiel eines Dampfkraftwerks 2.

Das Dampfkraftwerk 2 nach FIG 1 weist einen Dampferzeuger 3 und eine Dampfturbine 4 mit Hoch- 5, Mittel- 6 und Niederdruckstufe 7 auf, die an einer vom Dampferzeuger 3 abgehenden Frischdampfleitung 8 angeschlossen ist. Im Dampferzeuger 3 wird Kohlestaub verfeuert, der von Kohlemühlen 9 über eine Zuführeinrichtung 10 bereitgestellt wird.

Die Versorgung des Dampferzeugers 3 mit Verbrennungsluft erfolgt durch ein Kesselgebläse 11 bzw. ein Druckluftgebläse 12, die an entsprechende Luftzuleitungen 13,14 des Dampferzeugers 3 angeschlossen sind. Abgasseitig sorgen Saugzugventilatoren 15 für entsprechende Feuerungsunterstützung.

Der Dampfturbine 4 ist ein Kondensator 16 für den entspannten Dampf mit Kondensatpumpen 17 nachgeschaltet, die das Kondensat über eine Niederdruckvorwärmstufe 18 in einen Speisewasserbehälter 19 pumpt, der zugleich als Entgaser wirksam ist. Umwälzpumpen 20 sorgen für die Kühlung des Kondensators 16.

Am Speisewasserbehälter 19 sind Speisewasserpumpen 21 mit nachgeschaltetem Speisewasservorwärmer 22 angeschlossen, der in der Speisewasserzuleitung 23 des Dampferzeugers 3 liegt und über einen Bypass 24 umgangen werden kann.

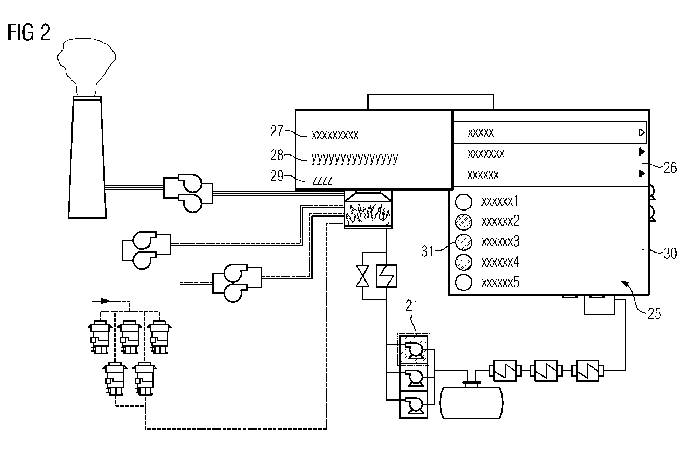

FIG 2 zeigt dasselbe Dampfkraftwerk 2 im Fehler- bzw. Wartungsfall einer der Speisewasserpumpen 21. Eine Farbkodierung für die Verfügbarkeit der Komponenten ermöglicht eine bildliche Überwachung der technischen Anlage 1 und der zugehörigen Wartungsaufgaben.

Eine bildliche Navigation durch das dargestellte System erfolgt in hierarchischen Daten (drill down navigation), bei der die verschiedenen Eigenschaften von vorhandenen Informationsobjekten herangezogen werden, um die Analyse beziehungsweise Suche nach ihnen schrittweise zu verfeinern. Diese Vorgehensweise ermöglicht ein "Hineinzoomen", bei dem die vorhandenen Daten in unterschiedlicher Detailtiefe betrachtet werden können. Im Fall der Speisewasserpumpe 21 kann beispielsweise über einen Rechtsklick auf das farbcodierte Symbol der fehlerbehafteten Komponente ein Informations- und Navigationsmenü 25 geöffnet werden. Im statischen Teil 26 des Menüs 25 sind z. B. Zeichnungen 27, charakteristische Kurven 28 und Handbücher 29 verlinkt und können durch Anklicken aufgerufen werden. Im dynamischen Teil 30 können aktuelle Statusabfragen erfolgen.

Nach Auswahl eines entsprechenden Eintrags zur Vergabe von Arbeitsaufträgen 31 im dynamischen Teil 30 des Informations-und Navigationsmenüs 25 wird das Wartungsprogramm des ERP-Systems gestartet und die entsprechende Eingabemaske 32 geöffnet.

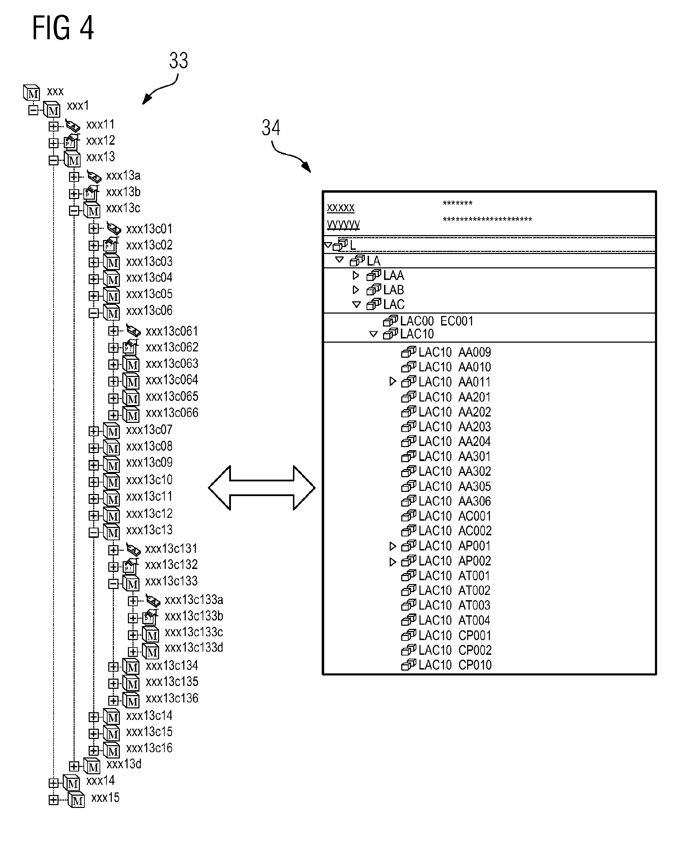

FIG 4 zeigt eine schematische Darstellung der Struktur der technischen Anlage 1 in den beiden Systemen Leittechnik 33 und ERP 34. Die Verzeichnisstruktur repräsentiert den logischen Aufbau der Systeme. Üblich ist eine Baumstruktur, die bei einer Wurzel (links) beginnt und sich dann nach rechts verzweigt. In jeder Ebene des Baumes können sowohl Dateien als auch weitere Verzeichnisse liegen. In FIG 4 ist beispielsweise die oberste Strukturierungsebene im dargestellten Zweig des ERP-Systems erreicht.

Durch die Abbildung der Struktur des Leitsystems im ERP-System lassen sich Attribute der abgebildeten Komponenten unter den Systemen austauschen, was sowohl die Erstbefüllung des ERP-Systems als auch die laufende Konsistenzhaltung beschleunigt und weniger fehleranfällig macht.

## Patentansprüche

1. Verfahren zur Instandhaltung einer technischen Anlage (1) mit mehreren Komponenten, umfassend ein System zur Planung der Verwendung von Unternehmungsressourcen (=ERP-System) und ein Leitsystem, **dadurch gekennzeichnet, dass** das ERP-System mit dem Leitsystem verbunden wird und Strukturen der technischen Anlage (1) im ERP-System automatisch aufgebaut werden.

2. Das Verfahren nach Anspruch 1, wobei die Strukturen der technischen Anlage technische Plätze und Ausstattungen, Einrichtungen oder Hilfsmittel umfassen.

3. Das Verfahren nach Anspruch 1 oder 2, wobei Schwellwerte für die Komponenten eingerichtet werden.

4. Das Verfahren nach einem der vorhergehenden Ansprüche,
wobei zustandhaltungsrelevante Daten aus dem Leitsystem an das ERP-System übermittelt werden.

5. Das Verfahren nach einem der vorhergehenden Ansprüche,
wobei bei Überschreiten eines Schwellwertes ein Voralarm ausgelöst wird.

6. Das Verfahren nach einem der vorhergehenden Ansprüche,
wobei Instandhaltungsanforderungen ausgelöst werden.

7. Das Verfahren nach einem der vorhergehenden Ansprüche,
wobei eine Wartungsmaßnahme des ERP-Systems mit Hilfe einer graphischen Benutzeroberfläche des Leitsystems geplant wird.

8. Das Verfahren nach einem der vorhergehenden Ansprüche,
wobei zur Bestimmung eines möglichen Lösungswegs leittechnische und ERP-Information gemeinsam dargestellt werden.

9. Das Verfahren nach einem der vorhergehenden Ansprüche,
wobei die Informationen eine letzte Reparatur, eine Dauer der Reparatur oder Kosten der Reparatur umfassen.

10. Das Verfahren nach einem der vorhergehenden Ansprüche,
wobei eine gesamte Instandhaltungshistorie einer Komponente dargestellt wird.

11. Das Verfahren nach einem der vorhergehenden Ansprüche,
wobei eine Darstellung nach Auftragsart erfolgt.

12. Das Verfahren nach einem der vorhergehenden Ansprüche,
wobei zugehörige Alarme und Trendlinien über einen Beobachtungszeitraum dargestellt werden.
